# EUROPEAN PATENT SPECIFICATION

(11) **EP 4 246 786 B1**
(45) Date of publication and mention of the grant of the patent: **07.10.2026**
(21) Application number: 23160639.3
(22) Date of filing: 08.03.2023
(51) Int. Cl.: H02K 21/22, H02K 1/14, H02K 1/16, H02K 1/2791

(54) **A MOTOR ASSEMBLY**
MOTORANORDNUNG
ENSEMBLE MOTEUR

(30) Priority: 18.03.2022 IN 202241014984
(43) Date of publication of application: 20.09.2023
(73) Proprietor: TVS Motor Company Limited, 600006 Chennai (IN)
(72) Inventor: Saxena, Soumya, 600 006 Chennai (IN); Subramonian, Chidambaram, 600 006 Chennai (IN); Patil, Yogesh, 600 006 Chennai (IN)
(74) Representative: Patentanwaltskanzlei Matschnig & Forsthuber OG

(56) References cited:
- WO-A1-2009/003913
- JP-A- 2014 124 092
- JP-A- 2017 221 100
- US-A1- 2018 323 662

## Description

### TECHNICAL FIELD

The present subject matter relates to a vehicle, more particularly, a motor assembly for improving efficiency of the vehicle.

### BACKGROUND

In recent times, the increasing threat of global warming has cautioned people to switch to alternate mode of transportation. These alternate modes of transportation, use an electric motor powered by batteries, to drive them. However, the output generated by such electric motors needs to be optimized and the cost incurred has to budgeted for gaining an improved efficiency of the electric motor.

### BRIEF DESCRIPT ION OF THE DRAWINGS

The present invention is described with reference to figures. This invention is implementable in two-wheeled, three-wheeled and four-wheeled vehicles. The same numbers are used throughout the drawings to reference like features and components. Further, the inventive features of the invention are outlined in the appended claims.
**Figure 1** illustrates a front view of a motor assembly (100), in accordance with an embodiment of the present subject matter.
**Figure 2a** illustrates a front view of a rotor (104) in the motor assembly (100), in accordance with an embodiment of the present subject matter.
**Figure 2b** illustrates a front view of a stator (102) in the motor assembly (100), in accordance with an embodiment of the present subject matter.
**Figure 3a** illustrates an exploded view of the motor assembly (100), in accordance with an embodiment of the present subject matter.
**Figure 3b** illustrates an exploded view of the motor assembly (100) with magnetic flux lines (206a), in accordance with an embodiment of the present subject matter.
**Figure 4** illustrates a front view of the stator (102) comprising a plurality of stator teeth (206), in accordance with an embodiment of the present subject matter.
**Figure 5** illustrates a front view of the plurality of stator teeth (206), in accordance with an embodiment of the present subject matter.
**Figure 6** illustrates a perspective view of the motor assembly (100) in an assembled condition (400), in accordance with an embodiment of the present subject matter.

### DETAILED DESCRIPTION

In conventional vehicles, mobility of the vehicle is provided by combustion of fuel by an internal combustion engine. In recent time, mobility of the vehicle is also provided by traction motors powered by a battery, or by a combination of fuel supply and batteries in hybrid vehicles. Therefore, in order to achieve optimum efficiency of the vehicle it is important to provide a simple yet improved design of the electric traction motor.

Electric vehicles have the electric motor as the only source for driving the vehicle. Further, the electric motor has a stator and a rotor which is coupled with a plurality of copper windings and generates magnetic field for enabling motion of the rotor of the motor. The electric motor also has plurality of magnets which enables generation of magnetic field when an electric supply is provided from the battery. Thus, construction of the electric motor is expensive and also requires complex design for efficient functioning.

As per known art, a construction of the rotor of the motor includes magnets being placed on an outer surface of the rotor. This construction enables generation of higher flux and high efficiency of the electric motor is achieved. However, since the magnets are placed on the outer surface of the rotor, due to centrifugal force, the magnets tend to keep on moving away from the centre core of the motor. In order to prevent this, a locking mechanism to lock the magnets in place is required. Such mechanism not only increases the cost and part count of the motor, but also leads to complex design and complex electrical connections to be established with the battery and a controller.

In conventional designs, in order to reduce the cost of the electric motor, the magnets in the motor are replaced with additional copper windings for producing another set of poles. However, a greater number of copper windings will result in more copper losses and also increase the weight and cost of the electric motor. Furthermore, due to high copper losses, the motor will also be heated quickly and therefore the efficiency of the electric motor decreases.

As per known art, a reluctance motor is provided with two salient poles and the two poles are electrically energized. However, even in the absence of the magnets, the construction of two salient poles is extremely complex. Further, the motor has to be continuously supplied with energy by the battery to keep the poles energized, which in turn reduces the life cycle of the battery owing to continuous draining and thereby leading to frequent change of the battery. Hence, such design affects the battery health and increases the overall cost of the vehicle.

As per known art, a motor design having one or more grooves on the stator teeth is provided to incorporate additional copper windings and eliminate the magnets. However, having such grooves enables winding of more copper wires but also causes chipping of the edges of the copper windings during frequent operation and usage. As a result, this design not only increases the copper losses due to use of more copper but also causes chipping of the copper wires which reduces the overall efficiency of the vehicle.

As per known art, the motor design is modified by equipping the stator with the magnets as well the copper windings wound around the stator teeth. In this design, the rotor does not have any windings or magnets. Though, this design is effective in achieving high speed due to high rotations by the rotor, however, the stator is extremely bulky in this design. This makes the motor design very dense and also complex during assembly of the motor.

As per known art US 2018/323662 A1, a motor having a stator with coupled teeth a includes a stator which includes a circular base, a plurality of poles radially formed in the base, and a plurality of teeth formed on an outer diameter of the pole; and a rotor which includes a rotor housing in which the stator is positioned inside and a plurality of magnets facing the teeth are formed on an inner wall, wherein two teeth are symmetrically formed on an outer diameter portion for each pole, and the number of teeth is twice the number of poles. However, in this configuration, the entire design and shape of the stator is changed which increases design complexity of the motor assembly.

As per known art JP 2014 124092 A, a motor assembly which includes an arrangement of stator poles and number of magnets in a ratio of 1:2 for improving torque ratio and torque ripple ration, and thereby improving the magnetic flux density of the motor assembly. However, this configuration also involves complex designing and assembly of the motor assembly.

As per known art JP 2017 221100 A, a motor assembly comprising a minimum distance between one of a permanent magnets and a corresponding one of the permanent magnets is defined as D, and the distance from the central point of the slot of the slot of the stator core to the center line of the air is defined as B in the radial direction of the stator core, and a distance from the gap center line to a corresponding one of the permanent magnets along the axial direction of the stator core passing through the slot center point. However, this configuration is also complex and hence requires more assembly time and manufacturing time.

As per known art WO 2009/003913 A1, a motor assembly comprising a pole overlapping ratio, ie the ratio of the magnet width M to the sum of the magnet width M and the gap width L, is 0.78 to 0.83. However, this ratio is also not effective to achieve the optimum efficiency of the motor assembly.

Furthermore, having a complex design of the electric motor also increases the complexity in incorporating logic in a controller for efficient functioning and cooling of the electric motor. Thus, the design complexity, size, weight and cost of the controller increases which in turn increases the overall cost of the vehicle.

Additionally, increasing higher quantity of material to make a stator would eventually compensate to increase stator losses. This in turn also reduces the amount of copper wires to be used in such a motor assembly, and thereby reducing the copper. However, just adding more material to make the stator increases the weight of the stator and also prevents adequate circulation of magnetic field across the motor assembly and thereby reduces the overall efficiency of the motor and in turn increases the cost of the motor assembly.

Hence, it is an object of the present invention to overcome all the above stated and other related problems existing in known arts, and provide an improved motor design which increases the efficiency of the motor by minimizing the amount of copper and magnets used in the design of the electric motor.

It is further an object of the present invention to provide an economical design of the electric motor which uses less amount of copper and magnets.

It is further an object of the present invention to reduce the amount of stator loss and copper loss in the electric motor.

It is further an object of the present invention to reduce leakage flux of the motor and increase effective torque to run the motor at high speeds.

The present subject matter provides an improved motor assembly comprising: a stator having a plurality of stator teeth and a plurality of slots, being formed between each of plurality of stator teeth; a rotor having a plurality of magnets. A magnet gap existing between each adjacent magnet of the plurality of magnet. An annular air gap AG existing between the stator and the rotor on joining or assembling of the stator and the rotor. The stator has a base ring and on an outer peripheral surface of the base ring or yoke or stator core, the stator teeth are formed projecting radially outwards from the yoke. The base ring has a radial thickness which forms an intermediate gap. The intermediate gap exists between an inner surface of the stator or the motor assembly and an outer surface of the base ring which is also the base of one of the plurality of stator slots. The magnet gap, the air gap and the intermediate gap are configured to be of predetermined dimensions for maximizing efficiency of the motor assembly.

As per an aspect of the present invention a motor assembly according to claim 1 is provided comprising: a stator having a core and a plurality of stator teeth and a plurality of slots, being formed between each of plurality of stator teeth; a rotor having a plurality of magnets. A magnet gap Mg existing between each adjacent magnet of the plurality of magnet. The stator having an inner wall and an outer wall. An air gap AG is formed between the stator and the rotor on joining or assembling of the stator and the rotor. An intermediate gap having a radial width L3 exists between an inner wall of the stator and an outer surface of the core or base ring which is also the base of one of the plurality of stator slots. The magnet gap, the air gap and the intermediate gap are configured to be of predetermined dimensions for maximizing efficiency of the motor assembly. Further, according to the invention, the magnet gap, the air gap and the intermediate, gap being configured in a ratio of 1:0.8:1 with a tolerance of ± 10%.

As per an embodiment, the stator is disposed at the inner side of the motor assembly. The rotor is disposed concentric to the stator. The rotor having an inner periphery surface and an outer periphery surface. The plurality of magnets is disposed on the inner periphery surface of the rotor. The each of the plurality of stator tooth having a first portion, a central portion and a second portion. The central portion of each of the plurality of stator teeth having a width (L1), and the width (L1) being greater than a normal width of the central portion, where the normal width of the central portion being between 45-90 mm. The plurality of slots having a width (L2), said width (L2) being lesser than a normal width of the plurality of slots, where the normal width of the plurality of slots being not more than 5mm. As per an aspect of the present invention, the intermediate gap being substantially radially equal in length to the second portion of the stator teeth. As per another embodiment, the second portion and the intermediate gap portion together form the annular core or the yoke of the stator.

As per another embodiment, the plurality of magnets is equal to or less than 46 in numbers and the plurality of magnets having the predetermined width dimension of maximum 11mm as a magnet width. The plurality of stator teeth is protruding outwards from the stator ring thereby forming the plurality of stator slots between the stator teeth and forming an outer wall. The plurality of stator teeth and the plurality of stator slots are disposed between an inner wall and the outer wall of the stator. As per a preferred embodiment, the plurality of stator teeth being not more than 48 in number.
As per another embodiment, an insulating material is inserted into the magnet gap for prevention of flux leakage through the plurality of magnets. A two or more hall sensors are disposed at a predetermined angle between them for detection of position of the plurality of magnets. Further, each of the plurality of stator teeth have a tooth width, and the tooth width is greater than a normal tooth width, where the normal tooth width being between 45-90 mm. Further, the air gap as per a preferred embodiment has a predetermined dimension of not more than 0.8mm.

As per another embodiment, the stator is made up of steel. Further, as per a preferred embodiment, the ratio between the magnet width Mw and the magnet gap Mg is 1.8:1.

In accordance with the present configuration, one of the advantages is that when the ratio between the magnet width Mw and the magnet gap Mg is 1.8:1, it reduces the amount of magnetic material to be used in construction of a motor assembly and thereby reduces the overall cost of the vehicle.

In accordance with the present configuration, one of the advantages is that when steel is used to make the rotor. it reduces the amount of copper used to about 35% of a conventional motor assembly and therefor reduces the copper losses in the motor assembly.

In accordance with the present configuration, one of the advantages is that the plurality of magnets being disposed on the inner periphery of the rotor provides a fixed attachment for the plurality of magnets and therefore this eliminates a need for any locking mechanism for the magnets. The current invention therefore is able to overcome the issue of undesirable radial motion of the magnets which would have otherwise been caused due to centrifugal force as explained earlier.

In accordance with the present configuration, one of the advantages is that the increase in dimensions of the stator teeth and the base ring or yoke and the plurality of magnets reduces the magnet gap Mg and the intermediate gap which in turn requires a smaller number of copper windings to provide a higher efficiency of operation of the motor assembly above. As per the present invention efficiency of the order of 90% can be achieved.

The present subject matter is further described with reference to accompanying figures. It should be noted that the description and figures merely illustrate the principles of the present subject matter. Various arrangements may be devised that, although not explicitly described or shown herein, encompass the principles of the present subject matter.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible within the scope of the claims. Having thus described embodiments of the present disclosure, a person of ordinary skill in the art will recognize that changes may be made in form and detail without departing from the scope of the present disclosure. Thus, the present disclosure is limited only by the claims.

Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

The embodiments of the present invention will now be described in detail with reference to the accompanying drawings.

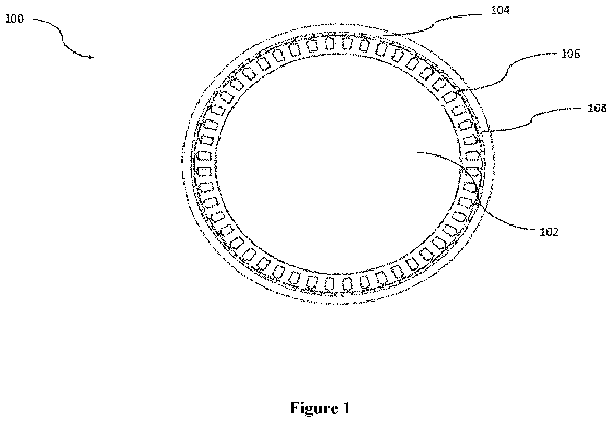

**Figure 1** illustrates a front view of a motor assembly (100), in accordance with an embodiment of the present subject matter. A motor assembly (100) comprising a stator (102) and a rotor (104). The motor assembly (102) is designed to have the stator (102) and the rotor (104) built as concentric circles. The rotor (104) is concentrically surrounding the stator (102) on the outer periphery of the stator (102). The rotor (104) is disposed on an inner periphery surface surrounding the stator (102). The stator (102) and the rotor (104) is adjoined together concentrically. An annular air gap Ag (106) is formed between an outer circumference of the stator (102) and an inner circumference of the rotor (104) on an assembly of both. In one embodiment, the air gap Ag (106) has a predetermined dimension and radial width of maximum 0.8mm. The air gap Ag (106) is one of the important parameters which contributes in improving an efficiency of the motor assembly (102). In one embodiment, the motor assembly (100) is an electric motor. In one embodiment, the motor assembly (100) is used in vehicles such as two-wheeled, three-wheeled or multi-wheeled vehicles.

The rotor (104) rotates to produce a rotating magnetic field and the magnetic field cuts a rotating field of the stator (102) to produce torque on the rotor. The stator (102) is energized electrically to produce a rotating field, this field interacts with the rotating magnetic field of the rotor (104) and produces a torque which rotates the rotor (104).

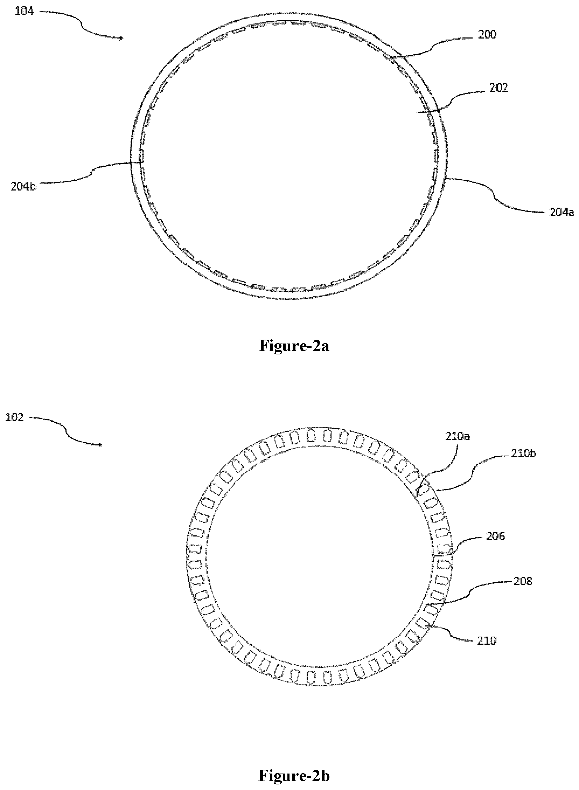

**Figure 2a** illustrates a front view of a rotor (104) in the motor assembly (100), in accordance with an embodiment of the present subject matter. The rotor (104) is comprising an outer periphery surface (204a) and an inner periphery surface (204b). The inner periphery surface (204b) of the rotor (104) has a plurality of magnets (200) installed thereat. As per a preferred embodiment, the plurality of magnets (200) are attached on the inner periphery surface (204b) through a one or more attachment means like adhesives. The plurality of magnets (200) have a predetermined width dimension of 11mm in one embodiment. In one embodiment, the number of plurality of magnets (200) attached to the rotor (104) is 46 in number. In one embodiment, the plurality of magnets (200) being a permanent magnet.

The plurality of magnets (200), as per the current invention, are placed on the inner periphery surface (204b) of the rotor (104), due to which the plurality of magnets (200) do not get displaced owing to centrifugal force. As a result, there arises no need to design a separate mechanism to lock the plurality of magnets (200) in place and hence the cost and complexity in design reduces.

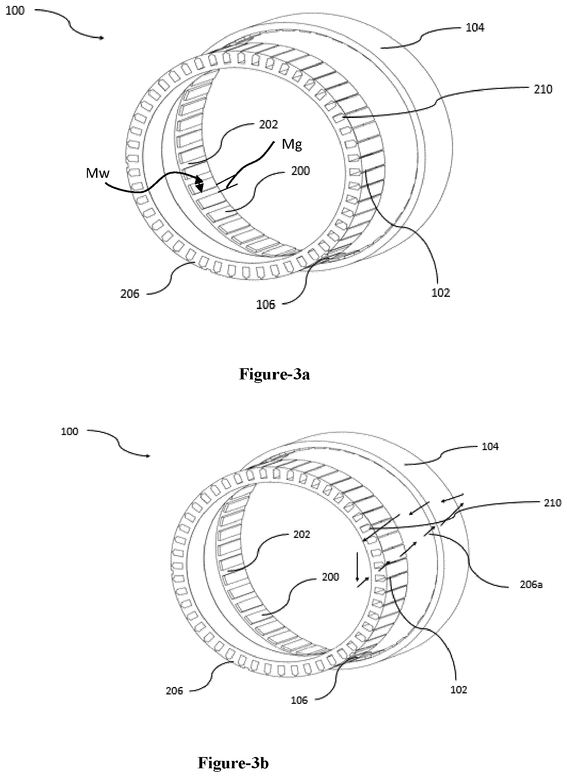

Due to the plurality of magnets (200), the rotor (104) generates a rotor back emf which enables generation of magnetic end flux lines (206a)(as shown in figure 3b). These magnetic end flux lines (206a) are generated from one end of the rotor (104) and travel towards another end of the rotor (104) and thereby complete the path of magnetic end flux (206a). This provides constant magnetic flux to be generated across the rotor (104).

The plurality of magnets (200) are located by keeping a magnet gap Mg (202) between each adjacent magnet of the plurality of magnets (200). The magnet gap Mg (202) is filled by inserting an insulating material between each of the plurality of magnets (200). The insulating material prevents flux leakage and also the plurality of magnets (200) does not get attracted to each other and thereby prevents damage of the plurality of magnets (200). In one embodiment, a ratio R1 between a magnet width Mw and the magnet gap Mg (202) is 1.8:1. This ratio is achieved when the magnet gap Mg (202) is approximately half of the width of magnet. This embodiment saves around one third magnetic material to be used in the construction of the rotor (104). Thus, the motor assembly (100) is constructed using one third of lesser material than a conventional motor and the cost incurred is also one third lesser than a usual motor design.

Additionally, an advantage of improved efficiency in this design of the motor assembly (100) is obtained due to larger difference between the air gap AG (106) and the magnet gap Mg (202), where magnet gap Mg (202) is more than the airgap AG (106) between the rotor (104) and the stator (102).

**Figure 2b** illustrates a front view of a stator (102) in the motor assembly (100), in accordance with an embodiment of the present subject matter. The stator (102) comprises of a plurality of stator teeth (206) being disposed on the outer periphery of the yoke of the stator (102). The plurality of stator teeth (206) is configured to have a plurality of stator slots (210) between each adj acent teeth of the plurality of stator teeth (206). The plurality of stator teeth (206) are protruding outwards from the yoke forming the plurality of stator slots (210) and an outer wall (210b). The plurality of stator teeth (206) and the plurality of stator slots (210) are disposed between an inner wall (210a) and the outer wall (210b) of the stator (102). In one embodiment, the plurality of stator teeth (206) are made up of steel. Furthermore, two or more hall sensors are disposed forming a predetermined angle between them for detection of position of the plurality of magnets (200).

Further, a plurality of copper windings is wound around each of the plurality of stator slots (210). The copper windings lead to copper losses during wear and tear and cause heating of the motor assembly (100). In one embodiment, the number of the plurality of stator teeth (206) is 48 in number. The stator (102) carries the copper windings forming a connection of copper coils. These copper coils are connected in 3 phase star connection having one end shorted to form a neutral point and other three ends routed outside for getting power from a controller. The stator (102) is energized by a 3-phase current supplied by the controller which produces rotating magnetic field. This field interacts with a rotor magnetic field to produce a torque.

In this design of the motor assembly (100), the stator (102) is optimized to minimize leakage flux and also volume of the stator (102) is increased. This is turn reduces the copper area in such a way that the losses in the stator (102) are reduced and the copper losses are also reduced. Reduction in the losses in the stator (102) is more helpful than reduction in the copper loss because losses in the stator (102) consists of about two third of total the losses and copper losses consist of one third total losses in rated condition which leads to high heat generation and undesirable reduction in the efficiency of the motor assembly (100).

Since the stator (102) is made of steel, the overall design of the motor assembly (100) has more steel material than copper material in the stator (102). Hence the losses in the stator (102) are reduced, although copper losses are present but reduction in the losses in the stator (102) are higher than the copper losses. Hence there is overall efficiency improvement along with reduction in cost of magnet and copper used in the design of the motor assembly (100).

**Figure 3a** illustrates an exploded view of the motor assembly (100), in accordance with an embodiment of the present subject matter. **Figure 3b** illustrates an exploded view of the motor assembly (100) with magnetic flux lines (206a), in accordance with an embodiment of the present subject matter. The stator (102) is fixedly attached inside the rotor (104). The stator (102) is axially inserted into the rotor (104) so that the air gap AG (106) is formed. The motor assembly (100) is arranged to form the stator (102) and the rotor (104) as concentric circles.

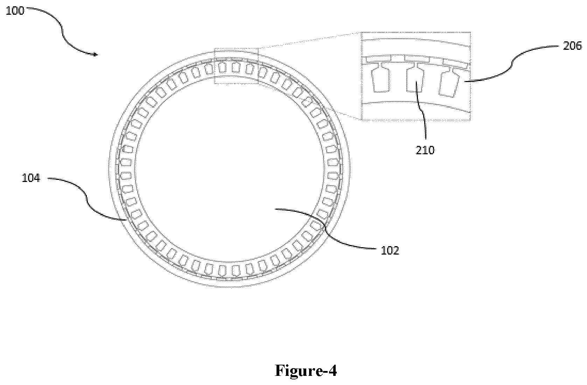

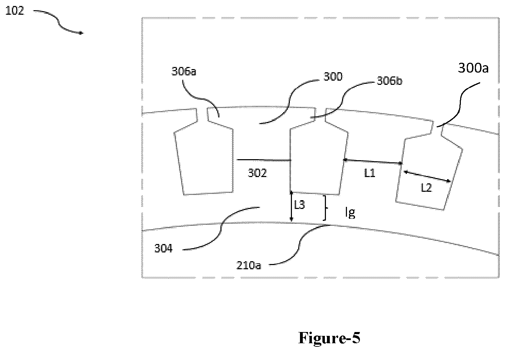

**Figure 4** illustrates a front view of the stator (102) comprising a plurality of stator teeth (206). **Figure 5** illustrates a magnified front view of the plurality of stator teeth (206), in accordance with an embodiment of the present subject matter. Figures 4 and 5 will be discussed together for brevity.

In one embodiment, each of the plurality of stator teeth (206) has a tooth width (L1). In one embodiment, the tooth width (L1) is greater than the tooth width of a conventional stator tooth, where the tooth width of a conventional stator tooth being not more than 90 mm. The each of the plurality of stator teeth (206) comprising a first portion (300), a central portion (302) having the tooth width (L1), and a second portion (304) said second portion (304) being attached to the yoke of the stator. The first portion (300) having a trapezoidal profile with two ends (306a, 306b). The central portion (302) having the tooth width (L1) is wider than a conventional stator tooth. This in turn, causes each of the plurality of slots (210) having width (L2) to be narrower and lesser than a normal width of each of the plurality of slots of a conventional stator tooth, where the normal width of each of the plurality of slots is not more than 5mm. The normal width is the width of the central portion of each of the plurality of slots of a conventional stator tooth of a conventional motor assembly. The normal width being between 45-90 mm in one embodiment. The second portion (304) is in near proximity with a stator core and the second portion (304) is disposed at a distance (L3) from the stator core also referred as the intermediate gap (Ig). The width (L1) of the central portion (302) is wider which contributes to overall increase in width of the each of the plurality of stator teeth (206).

The plurality of stator slots (210) also has a tapering profile and having the width (L2) for winding the copper windings. Due to increase in the dimension of the central portion (302) having the width (L1), the width (L2) of the plurality of stator slots (210) is reduced. This leads to lesser number of copper windings to be wound around each of the plurality of stator teeth (206). This further leads to the motor assembly (100) having a lesser winding factor which consumes less copper. Further, the motor assembly (100) has a cogging torque at 50% value of a normal cogging torque present in a conventional design due to the reduced width in the intermediate gaps (Ig) and by increasing the width of the plurality of stator teeth L1.

In one embodiment, the width (L1) of the central portion (302) is referred as a tongue depth. Due to widening of the tongue depth, a stator back iron is generated from each of the plurality of stator teeth (206). The stator back iron travels across the width (L1) of the tongue depth, and thereby provides continuous magnetic field across the stator (102).

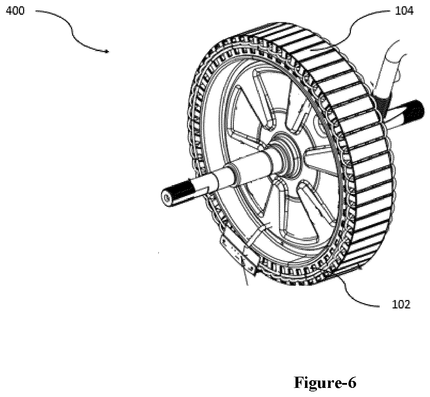

**Figure 6** illustrates a perspective view of the motor assembly (100) in an assembled condition (400), in accordance with an embodiment of the present subject matter. This design of the motor assembly (100) considerable increases the efficiency of the motor assembly (100) even after reducing the amount of copper and magnets used. This has been achieved by configuring a predetermined gap between each of the plurality of magnets (200) and each of the plurality of stator slots (210) in such a way that flux leakage is minimized.

The magnetic flux is carried by each of the plurality of stator teeth (206), each of the plurality of magnets (200) and the airgap (106). As a result of the present invention, a larger the area of the stator (102) is available to carry the flux, leading to a lower magnetic loading in each of the plurality of stator teeth (206). This provides opportunity to widen each of the plurality of stator teeth (206) to as large as extent possible as stator losses are two third of overall losses in rated condition. In order to increase the stator (102) area, each of the plurality of stator slots opening (300a) is also kept minimum so that there is space to insert copper wire during winding. Therefore, in the present design of the motor assembly, the stator (102) is made of steel which being light weight can be accommodated in larger quantity without making the motor assembly bulky.

Further, the magnet width Mw, the magnet gap Mg (202), the each of the plurality of stator slots opening (300a), the width (L1) of the central portion (302), the width (L2) of the each of the plurality of stator slots (210), and the airgap AG (206) are considered altogether as a primary parameter for determining the overall efficiency of the motor assembly (100). Further, the rotor back iron and the stator back iron is optimized as secondary parameters to get a configuration which minimizes flux leakage, stator saturation, magnet saturation and uses all the plurality of stator teeth (206) uniformly for flux distribution to produce a desirable torque. This in turn significantly reduces the amount of magnetic material to be used to construct the magnets and also reduces the copper losses by reducing the number of copper wires to be wound in the motor assembly (100).

Furthermore, the motor assembly (100) being provided with a heat handling capacity for sustaining heat aberrations for a substantial period of time. The heat handling requirement is about 40% lesser than the heat handling capacity of the conventional motor. This is due to less winding factor of the motor assembly, which requires fewer copper wires and hence the copper losses are reduced which in turn increases heat dissipation requirement of the motor assembly (100). According to the invention, the magnet gap Mg (202), the air gap AG (106) and the intermediate gap (Ig) being in a ratio R2 of 1:0.8:1 which thereby increases the efficiency of the motor assembly (100) by consuming less amount of material to construct the motor assembly (100).

While the present invention has been shown and described with reference to the foregoing preferred embodiments, it will be apparent to those skilled in the art that changes in form, connection, and detail may be made therein without departing from the scope of the invention as defined by the claims.

### Reference Numerals:

100 motor assembly
102 stator
104 rotor
106 air gap AG
200 plurality of magnets
202 magnet gap Mg
204a outer periphery
204b inner periphery
206 plurality of stator teeth
206a magnetic flux lines
210 plurality of stator slots
210a inner wall
210b outer wall
300 first portion
302 central portion
304 second portion
306a, 306b two ends
400 motor assembly in an assembled condition

## Claims

1. A motor assembly (100) comprising:
a stator (102), said stator (102) having a core and a plurality of stator teeth (206) and a plurality of slots (210), said plurality of slots (210) being formed between each adjacent tooth of said plurality of stator teeth (206);
said stator (102) having an inner wall (210a) and an outer wall (210b);
wherein said stator teeth (206) being attached to said core forming an intermediate gap (Ig) thereat, said intermediate gap (Ig) having a radial width (L3) formed between said inner wall (210a) and an outer surface of said core,
a rotor (104), said rotor (104) having a plurality of magnets (200);
wherein, each adjacent magnet of said plurality of magnets (200) being configured with a magnet gap Mg (202) existing between each adjacent magnet of said plurality of magnets (200);
wherein in an assembled condition of said stator (102) and said rotor (104), an annular air gap AG (106) being formed between said stator (102) and said rotor (104); and
wherein said magnet gap Mg (202), said air gap AG (106) and said intermediate gap (Ig) being configured with predetermined dimensions for maximizing efficiency of said motor assembly (100),
**characterized in**
said magnet gap Mg (202), said air gap AG (106) and said intermediate gap (Ig) being in a ratio R2 of 1:0.8:1 and being within a tolerance of ± 10%.

2. The motor assembly (100) as claimed in claim 1, wherein said stator (102) being disposed on an inner side of said motor assembly (100), and said rotor (104) being disposed concentric to said stator (102).

3. The motor assembly (100) as claimed in claim 1, wherein said rotor (104) having an inner periphery surface (204b) and an outer periphery surface (204a).

4. The motor assembly (100) as claimed in claim 3, wherein said plurality of magnets (200) being disposed on said inner periphery surface (204b) of said rotor (104).

5. The motor assembly (100) as claimed in claim 4, wherein said plurality of magnets (200) being not more than 46 in number, and said plurality of magnets (200) having a predetermined dimension of not more than 11mm as a magnet width Mw.

6. The motor assembly (100) as claimed in claim 1, wherein said plurality of stator teeth (206) protruding outwards from said stator core forming said plurality of stator slots (210), and forming an outer wall (210b).

7. The motor assembly (100) as claimed in claim 6, wherein said plurality of stator teeth (206) and said plurality of stator slots (210) being disposed between an inner wall (210a) and said outer wall (210b) of said stator (102).

8. The motor assembly (100) as claimed in claim 6, wherein said plurality of stator teeth (206) being not more than 48 in number.

9. The motor assembly (100) as claimed in claim 1, wherein each of said stator teeth (206) of said stator (102) having a first portion (300), a central portion (302) and a second portion (304).

10. The motor assembly (100) as claimed in claim 9, wherein said central portion (302) of each of said plurality of stator teeth (206) having a width (L1), wherein said width (L1) being greater than a normal width of said central portion (302), wherein said normal width being between 45-90mm, wherein said normal width being a width of said central portion (302) of a conventional stator tooth of a conventional motor assembly (100).

11. The motor assembly (100) as claimed in claim 1, wherein said plurality of slots having a width (L2), said width (L2) being lesser than a normal width of said plurality of slots of a conventional stator and providing a less winding factor of copper wires, wherein said normal width of the plurality of slots being not more than 5mm.

12. The motor assembly (100) as claimed in claim 1, wherein said air gap AG (106) having said predetermined radial width dimension of not more than 0.8 mm.

13. The motor assembly (100) as claimed in claim 5, wherein a ratio R1 between said magnet width Mw with said magnet gap Mg (202) being 1.8:1.

## Patentansprüche

1. Motorbaugruppe (100), umfassend:
einen Stator (102), wobei der Stator (102) einen Kern sowie eine Vielzahl von Statorzähnen (206) und eine Vielzahl von Nuten (210) aufweist, wobei die Vielzahl von Nuten (210) zwischen jeweils benachbarten Zähnen der Vielzahl von Statorzähnen (206) ausgebildet ist;
wobei der Stator (102) eine Innenwand (210a) und eine Außenwand (210b) aufweist;
wobei die Statorzähne (206) an dem Kern befestigt sind und dort einen Zwischenspalt (Ig) bilden, wobei der Zwischenspalt (Ig) eine radiale Breite (L3) aufweist, die zwischen der Innenwand (210a) und einer Außenfläche des Kerns gebildet ist,
einen Rotor (104), wobei der Rotor (104) eine Vielzahl von Magneten (200) aufweist;
wobei jeder benachbarte Magnet der mehreren Magnete (200) so ausgebildet ist, dass zwischen jedem benachbarten Magneten der mehreren Magnete (200) ein Magnetspalt Mg (202) vorhanden ist;
wobei in einem zusammengebauten Zustand des Stators (102) und des Rotors (104) ein ringförmiger Luftspalt AG (106) zwischen dem Stator (102) und dem Rotor (104) gebildet ist; und
wobei der Magnetspalt Mg (202), der Luftspalt AG (106) und der Zwischenspalt (Ig) mit vorgegebenen Abmessungen ausgebildet sind, um den Wirkungsgrad der Motorbaugruppe (100) zu maximieren,
**dadurch gekennzeichnet, dass** der Magnetspalt Mg (202), der Luftspalt AG (106) und der Zwischenspalt (Ig) in einem Verhältnis R2 von 1:0,8:1 stehen und innerhalb einer Toleranz von ± 10 % liegen.

2. Motorbaugruppe (100) nach Anspruch 1, wobei der Stator (102) auf einer Innenseite der Motorbaugruppe (100) angeordnet ist und der Rotor (104) konzentrisch zum Stator (102) angeordnet ist.

3. Motorbaugruppe (100) nach Anspruch 1, wobei der Rotor (104) eine innere Umfangsfläche (204b) und eine äußere Umfangsfläche (204a) aufweist.

4. Motorbaugruppe (100) nach Anspruch 3, wobei die mehreren Magnete (200) an der inneren Umfangsfläche (204b) des Rotors (104) angeordnet sind.

5. Motorbaugruppe (100) nach Anspruch 4, wobei die Vielzahl von Magneten (200) nicht mehr als 46 Stück umfasst und die Vielzahl von Magneten (200) eine vorbestimmte Abmessung von nicht mehr als 11 mm als Magnetbreite Mw aufweist.

6. Motorbaugruppe (100) nach Anspruch 1, wobei die Vielzahl von Statorzähnen (206) vom Statorkern nach außen vorsteht, die Vielzahl von Statorschlitzen (210) bildet und eine Außenwand (210b) bildet.

7. Motorbaugruppe (100) nach Anspruch 6, wobei die Vielzahl von Statorzähnen (206) und die Vielzahl von Statorschlitzen (210) zwischen einer Innenwand (210a) und der Außenwand (210b) des Stators (102) angeordnet sind.

8. Motorbaugruppe (100) nach Anspruch 6, wobei die Vielzahl von Statorzähnen (206) nicht mehr als 48 Stück umfasst.

9. Motorbaugruppe (100) nach Anspruch 1, wobei jeder der Statorzähne (206) des Stators (102) einen ersten Abschnitt (300), einen mittleren Abschnitt (302) und einen zweiten Abschnitt (304) aufweist.

10. Motorbaugruppe (100) nach Anspruch 9, wobei der mittlere Abschnitt (302) jedes der mehreren Statorzähne (206) eine Breite (L1) aufweist, wobei die Breite (L1) größer ist als eine normale Breite des Mittelabschnitts (302), wobei die normale Breite zwischen 45 und 90 mm liegt, wobei die normale Breite eine Breite des Mittelabschnitts (302) eines herkömmlichen Statorzahns einer herkömmlichen Motorbaugruppe (100) ist.

11. Motorbaugruppe (100) nach Anspruch 1, wobei die Vielzahl von Nuten eine Breite (L2) aufweist, wobei die Breite (L2) kleiner ist als eine normale Breite der Vielzahl von Nuten eines herkömmlichen Stators und einen geringeren Wicklungsfaktor der Kupferdrähte bereitstellt, wobei die normale Breite der Vielzahl von Nuten nicht mehr als 5 mm beträgt.

12. Motorbaugruppe (100) nach Anspruch 1, wobei der Luftspalt AG (106) die vorbestimmte radiale Breite von nicht mehr als 0,8 mm aufweist.

13. Motorbaugruppe (100) nach Anspruch 5, wobei das Verhältnis R1 zwischen der Magnetbreite Mw und dem Magnetspalt Mg (202) 1,8:1 beträgt.

## Revendications

1. Ensemble moteur (100) comprenant :
un stator (102), ledit stator (102) comportant un noyau, une pluralité de dents de stator (206) et une pluralité de fentes (210), ladite pluralité de fentes (210) étant formée entre chaque dent adjacente de ladite pluralité de dents de stator (206) ;
ledit stator (102) comportant une paroi intérieure (210a) et une paroi extérieure (210b) ;
dans lequel lesdites dents de stator (206) sont fixées audit noyau en formant un entrefer intermédiaire (Ig) à cet endroit, ledit entrefer intermédiaire (Ig) ayant une largeur radiale (L3) formée entre ladite paroi intérieure (210a) et une surface extérieure dudit noyau,
un rotor (104), ledit rotor (104) comportant une pluralité d'aimants (200) ;
dans lequel chaque aimant adjacent parmi ladite pluralité d'aimants (200) est configuré de manière à présenter un entrefer magnétique Mg (202) existant entre chaque aimant adjacent de ladite pluralité d'aimants (200) ;
dans lequel, lorsque ledit stator (102) et ledit rotor (104) sont assemblés, un entrefer annulaire AG (106) est formé entre ledit stator (102) et ledit rotor (104) ; et
dans lequel ledit entrefer magnétique Mg (202), ledit entrefer AG (106) et ledit entrefer intermédiaire (Ig) étant configurés avec des dimensions prédéterminées afin de maximiser le rendement dudit ensemble moteur (100),
**caractérisé en ce que** ledit entrefer magnétique Mg (202), ledit entrefer d'air AG (106) et ledit entrefer intermédiaire (Ig) présentent un rapport R2 de 1:0,8:1 et s'inscrivent dans une tolérance de ± 10 %.

2. Ensemble moteur (100) selon la revendication 1, dans lequel ledit stator (102) est disposé sur un côté intérieur dudit ensemble moteur (100), et ledit rotor (104) est disposé de manière concentrique par rapport audit stator (102).

3. Ensemble moteur (100) selon la revendication 1, dans lequel ledit rotor (104) présente une surface périphérique intérieure (204b) et une surface périphérique extérieure (204a).

4. Ensemble moteur (100) selon la revendication 3, dans lequel ladite pluralité d'aimants (200) est disposée sur ladite surface périphérique intérieure (204b) dudit rotor (104).

5. Ensemble moteur (100) selon la revendication 4, dans lequel ladite pluralité d'aimants (200) ne compte pas plus de 46 éléments, et ladite pluralité d'aimants (200) présente une dimension prédéterminée ne dépassant pas 11 mm en tant que largeur d'aimant Mw.

6. Ensemble moteur (100) selon la revendication 1, dans lequel ladite pluralité de dents de stator (206) fait saillie vers l'extérieur à partir dudit noyau de stator, formant ladite pluralité de fentes de stator (210) et formant une paroi extérieure (210b).

7. Ensemble moteur (100) selon la revendication 6, dans lequel ladite pluralité de dents de stator (206) et ladite pluralité de fentes de stator (210) sont disposées entre une paroi intérieure (210a) et ladite paroi extérieure (210b) dudit stator (102).

8. Ensemble moteur (100) selon la revendication 6, dans lequel ladite pluralité de dents de stator (206) ne compte pas plus de 48 éléments.

9. Ensemble moteur (100) selon la revendication 1, dans lequel chacune desdites dents de stator (206) dudit stator (102) comporte une première partie (300), une partie centrale (302) et une deuxième partie (304).

10. Ensemble moteur (100) selon la revendication 9, dans lequel ladite partie centrale (302) de chacune des dents du stator (206) présente une largeur (L1), ladite largeur (L1) étant supérieure à une largeur normale de ladite partie centrale (302), ladite largeur normale étant comprise entre 45 et 90 mm, ladite largeur normale correspondant à la largeur de ladite partie centrale (302) d'une dent de stator classique d'un ensemble moteur classique (100).

11. Ensemble moteur (100) selon la revendication 1, dans lequel ladite pluralité de fentes présente une largeur (L2), ladite largeur (L2) étant inférieure à une largeur normale de ladite pluralité de fentes d'un stator classique et permettant un facteur d'enroulement réduit des fils de cuivre, ladite largeur normale de la pluralité de fentes n'étant pas supérieure à 5 mm.

12. Ensemble moteur (100) selon la revendication 1, dans lequel ledit entrefer AG (106) présente ladite dimension radiale prédéterminée ne dépassant pas 0,8 mm.

13. Ensemble moteur (100) selon la revendication 5, dans lequel le rapport R1 entre ladite largeur d'aimant Mw et ledit entrefer d'aimant Mg (202) est de 1,8:1.
